# EUROPÄISCHE PATENTANMELDUNG

(11) **EP 1 091 336 A1**
(43) Veröffentlichungstag der Anmeldung: **11.04.2001**
(21) Anmeldenummer: 99810911.0
(22) Anmeldetag: 06.10.1999
(51) Int. Cl.: G09B 19/04

(54) **Verfahren zur Erkennung und Korrektur von Fehlern in gesprochener Sprache und Vorrichtung zur Durchführung des Verfahrens**

(71) Anmelder: Ascom AG, 3000 Bern 14 (CH)
(72) Erfinder: Baiker, Stefan, 4053 Basel (CH)
(74) Vertreter: Roshardt, Werner Alfred, Dipl.-Phys.

(57) **Zusammenfassung**

Bei einem Verfahren zur Erkennung von Fehlern in gesprochener Sprache wird die Sprache mittels eines Mikrofons empfangen und in ein Audiosignal umgewandelt, worauf das Audiosignal kontinuierlich und automatisch auf bekannte Sprachfehler überprüft wird und erkannte Sprachfehler automatisch angezeigt werden. Dadurch wird die Erkennung von vordefinierten, wiederkehrenden Fehlern in gesprochener Sprache ermöglicht, die sich akustisch manifestieren. Zur Überprüfung auf bekannte Sprachfehler kann das Audiosignal einerseits sequenzweise mit gespeicherten Audiosignalsequenzen verglichen und anderseits gleichzeitig in einen Text gewandelt werden, der automatisch auf Grammatik- und Satzstellungsfehler überprüft wird, die ebenfalls angezeigt werden, wobei angezeigte Fehler beider Arten zusätzlich auch korrigiert werden können, sei es, indem der zu Sprache gewandelte korrigierte Text, oder indem die Audiosignale der aussprachemässig korrigierten Sprachsequenzen geeigneten Wiedergabemitteln zugeführt werden.

## Beschreibung

### Technisches Gebiet

Die Erfindung betrifft ein Verfahren zur Erkennung und Korrektur von Fehlern in gesprochener Sprache und eine Vorrichtung zur Durchführung des Verfahrens.

### Stand der Technik

Im Zuge der vorliegenden Beschreibung und der Patentansprüche wird unter Sprache stets gesprochene bzw. mündliche Sprache verstanden, während geschriebene bzw. schriftliche Sprache als Text bezeichnet wird.

Heutzutage sind einerseits eine Vielzahl von verschiedenen Verfahren und Vorrichtungen zur Erkennung von Sprache und zur Umsetzung derselben in Text, insbesondere in maschinenlesbaren Text, bekannt (Klasse G10L der internationalen Patentklassifikation). Andererseits sind moderne Textverarbeitungsprogramme bekannt, die mit einer Fehlerkorrekturfunktion bzw. einem Textkorrekturprogramm versehen sind, welche gewisse Rechtschreibe- und/oder Grammatikfehler in einem geschriebenen Text automatisch erkennen und z.T. auch korrigieren können. Schliesslich sind auch verschiedene Systeme bekannt, bei denen geschriebener Text in gesprochene Sprache umgesetzt wird.

Fehlererkennungssysteme im Rahmen von Textkorrekturprogrammen beschränken sich auf die Überprüfung, ob die Orthografieregeln eingehalten werden und/oder ob grobe Verstösse gegen einige wenige Regeln der Grammatik und des Satzaufbaus vorliegen, wobei die schriftlichen Texte durch eine Texteingabe von Hand oder durch ein mündliches Diktieren mit einer nachfolgenden automatischen Umsetzung von gesprochener Sprache in Text geschaffen worden sein können. Betonungsfehler und andere Fehler gesprochener Sprache werden dabei entweder übergangen, nicht erkannt, oder verlangen bei der Umwandlung von Sprache in Text die Wiederholung einer nicht wandelbaren Sprachsequenz bis diese eindeutig interpretiert werden kann, oder deren Eingabe mit anderen Mitteln, z.B. über eine Tastatur, oder durch die Auswahl aus auf einem Bildschirm angebotenen möglichen Interpretationen.

### Darstellung der Erfindung

Aufgabe der Erfindung ist es, ein Verfahren zur Erkennung von Fehlern in Sprache und eine Vorrichtung zur Durchführung des Verfahrens bereit zu stellen, welche die Erkennung eines möglichst grossen Anteils von Fehlern in gesprochener Sprache erlauben.

Die Lösung der Aufgabe ist durch die Merkmale der unabhängigen Ansprüche definiert. Gemäss der Erfindung wird bei einem Verfahren zur Erkennung von Fehlern in gesprochener Sprache die Sprache mittels eines Mikrofons empfangen und in ein Audiosignal umgewandelt, worauf das Audiosignal kontinuierlich und automatisch auf bekannte Sprachfehler überprüft wird und erkannte Sprachfehler automatisch angezeigt werden.

Unter einem Audiosignal wird im Zuge der vorliegenden Beschreibung und der Patentansprüche irgend ein Signal verstanden, das Schallwellen (auch akustische Wellen genannt), wie sie von einem oder mehreren Mikrofonen gemessen bzw. empfangen werden, repräsentiert bzw. auf wieder reproduzierbare Art darstellt. Dabei wird unter einer "Darstellung auf wieder reproduzierbare Art" verstanden, dass mittels des Audiosignals und einer Lautsprecheranlage (eventuell in Kombination mit Mitteln zur Signalverstärkung) wiederum Schallwellen erzeugt werden können, die den ursprünglich vom Mikrofon oder von den Mikrofonen empfangenen Schallwellen in akustischer Hinsicht ähnlich sind. Die Audiosignale können analog oder digital sein, und sie können als elektrische, optische oder andere geeignete physikalische Signale realisiert sein.

Erfindungsgemäss werden akustische Signale von gesprochener Sprache, die auf Sprachfehler überprüft werden soll, mittels eines Mikrofons empfangen und in Audiosignale umgewandelt. Diese werden anschliessend kontinuierlich und automatisch auf bekannte Sprachfehler überprüft, wobei erkannte Sprachfehler automatisch angezeigt werden. Es können somit bekannte Sprachfehler, die sich akustisch manifestieren, automatisch erkannt und angezeigt werden. Die Erfindung eignet sich deshalb hervorragend zum Trainieren (d.h. zum Erlernen und/oder zum Verbessern) des mündlichen Vortragens bzw. des Sprechens einer Sprache, insbesondere auch einer Fremdsprache.

Zur Überprüfung auf bekannte Sprachfehler kann das Audiosignal einerseits sequenzweise mit gespeicherten Audiosignalsequenzen verglichen und anderseits gleichzeitig in einen Text gewandelt werden, der automatisch auf Grammatik- und Satzstellungsfehler überprüft wird, die ebenfalls angezeigt werden, wobei angezeigte Fehler beider Arten zusätzlich auch korrigiert werden können, sei es, indem der zu Sprache gewandelte korrigierte Text, oder indem die Audiosignale der aussprachemässig korrigierten Sprachsequenzen geeigneten Wiedergabemitteln zugeführt werden.

Gemäss einer bevorzugten Ausführungsart der Erfindung wird das Audiosignal sequenzweise mit gespeicherten Audiosignalsequenzen von mit Sprachfehlern behafteten Sprachsequenzen verglichen, um entsprechende Sprachfehler im Audiosignal zu erkennen. (In diesem Zusammenhang ist nachfolgend unter einer fehlerbehafteten Audiosignalsequenz stets die Audiosignalsequenz einer mit einem Sprachfehler behafteten Sprachsequenz zu verstehen.) Zur Durchführung des Verfahrens gemäss dieser Ausführungsart der Erfindung werden zunächst in einem Initialisierungsvorgang Sprachsequenzen mit bekannten Sprachfehlern aufgenommen und als (fehlerbehaftete) Audiosignalsequenzen gespeichert. Anschliessend wird das zu überprüfende Audiosignal mittels geeigneter Signalkomparatormittel sequenzweise mit den gespeicherten fehlerbehafteten Audiosignalsequenzen verglichen. Wenn ein durch die Komparatormittel bestimmtes Vergleichsmass einen vordefinierten Schwellenwert übersteigt, so wird die überprüfte Audiosignalsequenz als mit dem selben Fehler behaftet angesehen wie die gespeicherte fehlerhafte Audiosignalsequenz, mit der sie verglichen wurde. Daraus wird geschlossen, dass die überprüfte Sprachsequenz den selben Sprachfehler enthält wie die der gespeicherten fehlerhaften Audiosignalsequenz zugrunde liegende Sprachsequenz.

Im Unterschied zu den bisher bekannten, ausschliesslich auf Textkorrekturprogrammen basierenden Fehlererkennungssystemen können bei einem Verfahren gemäss der erwähnten Ausführungsart der Erfindung, das Schritte zum Vergleichen von Audiosignalsequenzen umfasst, auch Sprechfehler, Aussprachefehler, Sprachfehler, Betonungsfehler usw. erkannt werden, die nach einer Umsetzung der Sprache in schriftlichen Text nicht mehr erkennbar sind. Dies erweist sich insbesondere auch bei der Analyse bzw. Überwachung von Gesprächen als Vorteil, die in einer Fremdsprache geführt werden. Auf diese Art können aber auch bekannte Sprechfehler, wie z.B. das eingeschobene "eh" oder"ehm", korrigiert werden.

Vorzugsweise wird beim Verfahren gemäss der Erfindung zum Zwecke der Fehlererkennung das Audiosignal in Text umgewandelt und anschliessend dieser Text auf im Text erkennbare Sprachfehler überprüft. Dadurch können die aus Textkorrekturprogrammen bekannten Methoden angewendet werden, um Satzbildungsfehler, fehlerhafte Konjugationen, fehlerhafte Deklinationen und ähnliche auch in geschriebenem Text erkennbare Sprachfehler zu erkennen und anzuzeigen.

Gemäss einer bevorzugten Variante der Erfindung wird nach dem Erkennen eines Fehlers in einem überprüften Audiosignalabschnitt dieser durch einen in Bezug auf den Fehler korrigierten Audiosignalabschnitt ersetzt. Somit kann, wenn das Audiosignal z.B. an einen Lautsprecher weitergeleitet wird, um dort wieder in ein akustisches Sprachsignal umgewandelt zu werden, die am Lautsprecher wiedergegebene Sprache im Vergleich zu der am Mikrofon empfangenen Sprache automatisch hinsichtlich der entdeckten Sprachfehler korrigiert werden. Insbesondere können - als Spezialfall der Fehlerkorrekturunnötige, in Bezug auf den Sprachstil störende Audiosignalabschnitte, die z.B. das weiter oben erwähnten "ehm" umfassen, auch bloss ausgefiltert werden. In diesem wird der fehlerbehaftete Audiosignalabschnitt durch eine Sprachpause ersetzt.

Der korrigierte Audiosignalabschnitt kann mittels Sprachsynthese erzeugt werden. Unter Sprachsynthese ist im vorliegenden Zusammenhang eine maschinelle und automatische (d.h. synthetische) Erzeugung eines Audiosignals aus einem maschinenlesbaren Text zu verstehen, wobei mittels des solcherart erzeugten Audiosignals und einer Lautsprecheranlage (eventuell in Kombination mit Mitteln zur Signalverstärkung) der Text akustisch, d.h. als hörbare und verständliche Sprache, wiedergegeben werden kann. Diese Art von Fehlerkorrektur ist besonders für die Korrektur von Sprachfehlern von relativ langen Audiosignalabschnitten, z.B. solchen, die Sprachfehler in Form von falschen Satzstellungen enthalten, geeignet, da der erforderliche Bedarf an Speicherplatz vergleichsweise klein ist.

Als Alternative zur Erzeugung des korrigierten Audiosignalabschnittes mittels Sprachsynthese kann dieser auch erzeugt werden, indem er aus einem oder mehreren gespeicherten fehlerfreien Audiosignalabschnitten bzw. Audiosignalsequenzen zusammengesetzt wird. Diese Variante der Fehlerkorrektur eignet sich insbesondere für Sprachfehler, die mittels der weiter oben erwähnten, Schritte zum Vergleichen von Audiosignalsequenzen umfassenden, Ausführungsart der Erfindung erkannt werden. Für diesen Fall kann zum Zwecke einer automatischen Fehlerkorrektur zu jeder gespeicherten, mit einem Sprachfehler behafteten Audiosignalsequenz eine dieser zugeordnete korrigierte Audiosignalsequenz ohne diesen Sprachfehler gespeichert werden. Letztere kann dann als Ersatz für eine überprüfte Audiosignalsequenz verwendet werden, wenn in dieser der zugeordnete Sprachfehler entdeckt wird.

Selbstverständlich können die Fehlerkorrektur und/oder Fehlererkennung auf der Basis von Audiosignalsequenzvergleichen sowie die Fehlerkorrektur und/oder Fehlererkennung auf der Basis von Textkorrekturprogrammen im Zusammenhang mit der erfindungsgemässen Lehre auch kombiniert eingesetzt werden.

Das erfindungsgemässe Verfahren kann quasi in Echtzeit durchgeführt werden, wobei unter einer Durchführung quasi in Echtzeit (auch als on-line Durchführung bezeichnet) verstanden wird, dass die Zeitspanne zwischen dem Empfang der akustischen Sprachsignale am Mikrofon und der Fehlererkennung höchstens einige wenige Sekunden, vorzugsweise sogar weniger als eine Sekunde, beträgt. Als Alternative zur Durchführung der Fehlererkennung in Quasi-Echtzeit können jedoch auch die zu überprüfenden Audiosignale gespeichert und die erfindungsgemässe Fehlererkennung im Nachhinein (off-line) durchgeführt werden.

Bei der on-line Durchführung der erfindungsgemässen Fehlererkennung wird vorzugsweise das Erkennen eines Fehlers in der Sprache unmittelbar (d.h. quasi in Echtzeit) dem Sprecher angezeigt, dessen Sprache vom Mikrofon empfangen wird. Der Sprecher erhält dadurch die Möglichkeit zum Anbringen von Korrekturen noch während seiner Rede, oder er wird wenigstens derart auf den Fehler aufmerksam gemacht, dass er in Zukunft versuchen kann, diesen zu vermeiden, insbesondere dann, wenn er mehrmals auf den gleichen Fehler aufmerksam gemacht wurde. Die Fehleranzeige an den Sprecher kann optisch (z.B. durch Aufleuchten einer LED), akustisch (z.B. durch Aussenden eines Summtons), mechanisch (z.B. durch Aktivierung eines Vibrationselementes) oder auf andere geeignete Art erfolgen. Es ist auch eine on-line Anzeige des Fehlers auf einem Bildschirm möglich, u.U. zusammen mit allfälligen Korrekturvorschlägen. Des weiteren ist auch eine automatische Korrektur der entdeckten Fehler quasi in Echtzeit möglich. Alternativ oder in Ergänzung zur on-line Anzeige/Korrektur der erkannten Sprachfehler können diese (bzw. die sie enthaltenden Sprachabschnitte) auch bloss für eine spätere Nachbearbeitung (z.B. für eine statistische Analyse und/oder ein Abhören mit anschliessender Wiedergabe der korrekten Sprechweise zu Trainingszwecken) gespeichert werden.

Eine Anordnung zur Durchführung eines Verfahrens zur Erkennung von Fehlern in Sprache weist ein Mikrofon zum Empfangen eines zu überprüfenden akustischen Sprachsignals und zum Umwandeln desselben in ein Audiosignal auf. Erfindungsgemäss umfasst die Anordnung weiter Mittel zur kontinuierlichen und automatischen Überprüfung des Audiosignals auf bekannte Sprachfehler und Anzeigemittel zur automatischen Anzeige von erkannten Sprachfehlern.

Vorzugsweise umfasst die Anordnung weiter Mittel zum Speichern von Audiosignalsequenzen und Komparatormittel zum sequenzweisen Vergleichen des zu überprüfenden Audiosignals mit gespeicherten (fehlerbehafteten) Audiosignalsequenzen, die mit Sprachfehlern behaftete Sprachsequenzen repräsentieren.

Weiter sind vorteilhafterweise Korrekturmittel vorgesehen, um nach dem Erkennen eines Fehlers in einem überprüften Audiosignalabschnitt diesen durch einen korrigierten Audiosignalabschnitt oder eine Sprachpause zu ersetzen. Zum Erzeugen des korrigierten Audiosignalabschnittes können Mittel zur synthetischen Erzeugung eines Audiosignalabschnittes vorgesehen sein, wobei der synthetisch erzeugte Audiosignalabschnitt einen Textabschnitt als gesprochene Sprache darstellt. In den Speichermitteln können nebst den fehlerbehafteten Audiosignalsequenzen zusätzlich auch fehlerfreie Audiosignalsequenzen gespeichert sein, welche zu Korrekturzwecken als Ersatz für mit Sprachfehlern behaftete Sprachabschnitte verwendet werden können.

Das Mikrofon zum Empfangen des zu überprüfenden akustischen Sprachsignals kann ein Mikrofon eines Telefonapparates, eines Handfunktelefons, eines Diktiergerätes, eines zur Erfassung von diktiertem Text ausgebildeten Computers, eines Megaphons oder einer Mikrofon und Lautsprecher umfassenden Lautsprecheranlage sein. Die erfindungsgemässe Fehlererkennung kann dann im Zusammenhang mit der üblichen Verwendung des entsprechenden Gerätes bzw. der entsprechenden Anlage durchgeführt werden, und zwar on-line und/oder off-line.

Gemäss einer weiteren bevorzugten Ausführungsart der Erfindung ist die Fehlererkennungsanordnung in einen Telefonapparat, ein Handfunktelefon, ein Diktiergerät, einen zur Erfassung von diktiertem Text ausgebildeten Computer, ein Megaphon oder eine Mikrofon und Lautsprecher umfassende Lautsprecheranlage integriert.

Eine erfindungsgemässe Fehlererkennungsanordnung kann weiter mit Anzeigemitteln versehen sein, welche es ermöglichen, das Erkennen eines Fehlers in der Sprache unmittelbar dem Sprecher anzuzeigen, dessen Sprache vom Mikrofon empfangen wird. Solche Anzeigemittel können eine Leuchte oder eine LED zur optischen Anzeige, einen Summer zur akustischen Anzeige, ein Vibrationselement zur mechanischen Anzeige oder andere geeignete Anzeigeelemente umfassen.

In der nachfolgenden detaillierten Beschreibung wird die Erfindung anhand von Ausführungsbeispielen erläutert, ohne dass dafür Zeichnungen erforderlich wären. Aus den Ausführungsbeispielen und der Gesamtheit der Patentansprüche ergeben sich weitere vorteilhafte Ausführungsformen und Merkmalskombinationen der Erfindung.

### Wege zur Ausführung der Erfindung

Ein Handy (Handfunktelefon) ist in für solche Geräte üblicher Art mit einem Mikrofon, einem Lautsprecher, einem Sendeempfänger und einer Antenne versehen. Das Mikrofon dient zum Empfangen eines akustischen Signals in Form von Schallwellen und zum Umwandeln desselben in ein Audiosignal. Das Handy ist mit einem A/D-Wandler versehen, welcher das vom Mikrofon erzeugte analoge Audiosignal in ein digitales Audiosignal umwandelt. Das digitale Audiosignal kann zum Sendeempfänger geleitet, von diesem weiter verarbeitet und mittels der Antenne über eine Funkübertragungsstrecke an eine Basisstation eines Mobilfunknetzes übertragen werden. Umgekehrt kann mittels der Antenne und des Sendeempfängers ein digitales Audiosignal von der Basisstation empfangen, verarbeitet, mittels eines D/A-Wandlers in ein analoges Audiosignal gewandelt und zum Lautsprecher des Handys geleitet werden, wo es in ein hörbares akustisches Signal umgewandelt wird.

Das Handy ist weiter mit einem erfindungsgemässen Fehlererkennungs- und Korrektursystem versehen, das ein Mikroprozessorsystem mit einem Mikroprozessor und digitalen Speichermitteln umfasst. Die Speichermittel dienen zum Speichern von Daten und zum Speichern von Programmen. In den Speichermitteln sind Programme gespeichert, welche es erlauben, mit Hilfe des Mikroprozessors ein digitales Audiosignal quasi in Echtzeit in Text umzuwandeln und diesen Text in den Speichermitteln zu speichern. Weiter sind in den Speichermitteln Fehlererkennungs- und Textkorrekturprogramme gespeichert, welche es ermöglichen, mit Hilfe des Mikroprozessors Fehler in einem in den Speichermitteln gespeicherten Text automatisch zu erkennen und zu korrigieren. Zudem sind in den Speichermitteln Programme zur Sprachsynthese mit Hilfe des Mikroprozessors gespeichert, welche es ermöglichen, aus einem in den Speichermitteln gespeicherten Text ein Audiosignal zu erzeugen, das diesen Text akustisch wiedergibt.

Die digitalen Speichermittel dienen weiter zum Speichern von Audiosignalsequenzen in digitaler Form. Die Speicherkapazität der Speichermittel ist derart bemessen, dass eine Vielzahl von Audiosignalsequenzen gespeichert werden können, wobei diese Sequenzen eine zeitliche Länge von weniger als einer Sekunde bis ungefähr eine Minute oder noch länger aufweisen können und ihre spektrale Bandbreite in einer für eine im betreffenden Kommunikationssystem optimale Sprachqualität ausreichenden Grössenordnung liegt.

Das Handy ist weiter mit einem Signalkomparator versehen, welcher es ermöglicht, zwei digitale Audiosignalsequenzen miteinander zu vergleichen und ein Vergleichsmass zu bestimmen.

Vor der ersten Anwendung des erfindungsgemässen Fehlererkennungs- und Korrektursystems wird zunächst ein Initialisierungsvorgang zur Initialisierung der auf dem Vergleich von Audiosignalsequenzen beruhenden Fehlererkennungs- und Korrekturschritten durchgeführt. Dazu aktiviert der Benutzer des Handys eine entsprechende Initialisierungsfunktion am Handy und spricht dann Sprachsequenzen mit bekannten Sprachfehlern in das Handymikrofon. Anschliessend spricht er dieselben Sprachsequenzen ohne Sprachfehler in das Mikrofon. Die Sprachsequenzen werden durch das Mikrofon und den A/D-Wandler in digitale Audiosignalsequenzen umgewandelt, welche in den Speichermitteln gespeichert werden, wobei jeweils einer mit einem Sprachfehler behafteten Audiosignalsequenz die entsprechende Audiosignalsequenz ohne Sprachfehler (nachfolgend auch als korrigierte Audiosignalsequenz bezeichnet) zugeordnet wird. Sodann wird für jede gespeicherte fehlerbehaftete Audiosignalsequenz ein Vergleichs-Schwellenwert voreingestellt, der für die spätere Fehlererkennung benötigt wird. Die Voreinstellung dieses Vergleichs-Schwellenwertes während des Initialisierungsvorgangs kann nach für automatische Spracherkennungssysteme üblichen Verfahren durchgeführt werden. Die Vergleichs-Schwellenwerte für die verschiedenen Sprachfehler können später während dem Betrieb des Fehlererkennungssystems durch den Benutzer angepasst werden, um die Sensitivität der Fehlererkennung zu erhöhen oder zu senken. Nach der Aufnahme und Speicherung von sämtlichen Sprachfehlern, für die eine automatische, auf dem Vergleich von Audiosignalsequenzen beruhende Fehlererkennung gewünscht wird, und der Voreinstellung der entsprechenden Vergleichs-Schwellenwerte, kann der Initialisierungsvorgang beendet werden.

Sobald das Fehlererkennungs- und Korrektursystem einmal initialisiert ist, kann es während dem Betrieb des Handys in verschiedenen Modi aktiviert oder deaktiviert werden, wobei die verschiedenen Betriebsmodi wahlweise mittels eines Fehlererkennungsmoduswahlschalters am Handy eingestellt werden können.

In einem ersten Betriebsmodus wird on-line eine automatische Fehlererkennung ohne Fehlerkorrektur durchgeführt. Das am Mikrofon erzeugte analoge Audiosignal wird zunächst mittels des A/D-Wandlers in ein digitales Audiosignal umgewandelt und in den Speichermitteln gespeichert.

Danach wird das digitale Audiosignal dem Signalkomparator zugeführt und sequenzweise mit sämtlichen in den Speichermitteln gespeicherten Audiosignalsequenzen verglichen, die mit einem Sprachfehler behaftet sind. Die für die sequenzweisen Vergleiche gebildeten Sequenzen des zu überprüfenden Audiosignals können sich dabei zeitlich mindestens teilweise überlappen. Der Signalkomparator bestimmt für jeden Vergleich ein Vergleichsmass, das anschliessend mit dem Vergleichs-Schwellenwert für den jeweiligen Sprachfehler verglichen wird. Wenn das Vergleichsmass diesen Schwellenwert übersteigt, so wird die überprüfte Audiosignalsequenz als mit dem entsprechenden Sprachfehler behaftet angesehen. Auf diese Art können bekannte Sprechfehler, wie z.B. das eingeschobene "eh" oder"ehm", erkannt und korrigiert werden.

Anschliessend wird das zu überprüfende digitale Audiosignal mit Hilfe der in den Speichermitteln gespeicherten Programme in Text umgewandelt und dieser Text automatisch mit Hilfe der Fehlererkennungsprogramme auf im Text erkennbare Sprachfehler überprüft. Auf diese Art können Grammatik- und/oder Satzstellungsfehler erkannt und/oder korrigiert werden.

Im ersten Betriebsmodus wird nach der Erkennung eines Sprachfehlers dem Benutzer des Handys bloss angezeigt, dass ein Sprachfehler entdeckt wurde. Zur Fehleranzeige wird am Lautsprecher des Handys ein Summton ausgegeben. Der Benutzer des Handys wird dadurch quasi in Echtzeit während eines über das Handy geführten Gesprächs auf Sprachfehler aufmerksam gemacht. Er kann dann bei Bedarf einen Satz oder einen Ausdruck mit geänderter bzw. korrigierter Aussprache wiederholen oder seine Sprache im weiteren Verlaufe des Gesprächs anpassen, um die angezeigten Fehler zu vermeiden.

In einem zweiten Betriebsmodus wird on-line und automatisch eine Fehlererkennung mit nachfolgender Fehlerkorrektur durchgeführt. Die Fehlererkennung funktioniert gleich wie im oben beschriebenen ersten Betriebsmodus. Im Unterschied zum ersten Betriebsmodus wird jedoch nach dem Erkennen eines Fehlers in einem zu überprüfenden Audiosignalabschnitt nicht bloss ein Summton am Lautsprecher des Handys ausgegeben, sondern es wird zusätzlich der überprüfte Audiosignalabschnitt, in dem ein Fehler entdeckt wurde, durch einen hinsichtlich des Fehlers korrigierten Audiosignalabschnitt ersetzt, bevor das Audiosignal an den Sendeempfänger des Handys weiter geleitet wird, um von diesem über die Antenne an das Mobilfunknetz übertragen zu werden.

Zu diesem Zweck wird unmittelbar nach der Erkennung eines Sprachfehlers in dem auf dem Vergleich von Audiosignalsequenzen beruhenden Verfahrensschritt die überprüfte Audiosignalsequenz, in welcher ein Sprachfehler entdeckt wurde, durch die diesem Sprachfehler zugeordnete korrigierte Audiosignalsequenz ersetzt. Das bereits solcherart korrigierte Audiosignalsequenzen aufweisende Audiosignal wird danach analog wie im ersten Betriebsmodus mit Hilfe der in den Speichermitteln gespeicherten Programme in Text umgewandelt und auf im Text erkennbare Sprachfehler überprüft. Im zweiten Betriebsmodus werden sodann die im Text erkannten Sprachfehler mit Hilfe der in den Speichermitteln gespeicherten Textkorrekturprogramme automatisch korrigiert. Danach werden diejenigen Audiosignalabschnitte des ursprünglichen digitalen Audiosignals, welche Sprachfehler aufweisen, durch mittels Sprachsynthese erzeugte korrigierte Audiosignalabschnitte ersetzt, welche auf den entsprechenden Abschnitten des korrigierten Textes beruhen.

Im zweiten Betriebsmodus des Fehlererkennungs- und Korrektursystems wird somit on-line neben einer automatischen Fehlererkennung und Fehleranzeige weiter automatisch eine Fehlerkorrektur durchgeführt.

Obwohl die Erfindung im Detail anhand eines Anwendungsbeispiels für ein Handy beschrieben wurde, ist sie nicht auf diese Anwendung beschränkt. Sie kann auf ähnliche Art ebensogut in vorteilhafter Weise auch für einen drahtgebundenen Telefonapparat, ein Diktiergerät, einen mit einem Spracherkennungssystem ausgerüsteten Computer, eine Lautsprecheranlage mit Mikrofon oder andere ähnliche Anlagen bzw. Geräte angewendet werden.

Zusammenfassend ist festzustellen, dass durch die Erfindung ein Verfahren zur automatischen Erkennung und Anzeige von Fehlern in Sprache und eine Vorrichtung zur Durchführung des Verfahrens bereitgestellt werden, welche die Erkennung und Anzeige von vordefinierten, wiederkehrenden Fehlern in gesprochener Sprache erlauben, die sich akustisch manifestieren.

## Patentansprüche

1. Verfahren zur Erkennung von Fehlern in gesprochener Sprache, bei dem mittels eines Mikrofons gesprochene Sprache empfangen und in ein Audiosignal umgewandelt wird, wobei das Audiosignal kontinuierlich und automatisch auf bekannte Sprachfehler überprüft wird und erkannte Sprachfehler automatisch angezeigt werden.

2. Verfahren nach Anspruch 1, dadurch gekennzeichnet, dass das Audiosignal sequenzweise mit gespeicherten Audiosignalsequenzen von mit Sprachfehlern behafteten Sprachsequenzen verglichen wird, um entsprechende Fehler im Audiosignal zu erkennen.

3. Verfahren nach Anspruch 1 oder 2, dadurch gekennzeichnet, dass zum Zwecke der Fehlererkennung das Audiosignal in Text umgewandelt wird und dieser Text auf im Text erkennbare Sprachfehler überprüft wird.

4. Verfahren nach einem der Ansprüche 1 bis 3, dadurch gekennzeichnet, dass nach dem Erkennen eines Fehlers in einem überprüften Audiosignalabschnitt dieser durch einen in Bezug auf den Fehler korrigierten Audiosignalabschnitt ersetzt wird.

5. Verfahren nach Anspruch 4, dadurch gekennzeichnet, dass der korrigierte Audiosignalabschnitt mittels Sprachsynthese erzeugt wird.

6. Verfahren nach Anspruch 4, dadurch gekennzeichnet, dass als korrigierter Audiosignalabschnitt ein gespeicherter, fehlerfreier Audiosignalabschnitt verwendet wird.

7. Verfahren nach einem der Ansprüche 1 bis 6, dadurch gekennzeichnet, dass das Verfahren quasi in Echtzeit durchgeführt wird.

8. Verfahren nach einem der Ansprüche 1 bis 7, dadurch gekennzeichnet, dass das Erkennen eines Fehlers in der Sprache unmittelbar dem Sprecher angezeigt wird, dessen Sprache vom Mikrofon empfangen wird.

9. Verfahren nach einem der Ansprüche 1 bis 8, dadurch gekennzeichnet, dass überprüfte Sprachabschnitte, in welchen ein Sprachfehler erkannt wird, für eine spätere Analyse und/oder Nachbearbeitung gespeichert werden.

10. Anordnung zur Durchführung des Verfahrens nach einem der Ansprüche 1 bis 9, mit einem Mikrofon zum Empfangen eines akustischen Sprachsignals und zum Umwandeln desselben in ein Audiosignal, Mitteln zur kontinuierlichen und automatischen Überprüfung des Audiosignals auf bekannte Sprachfehler und Anzeigemitteln zur automatischen Anzeige von erkannten Sprachfehlern.

11. Anordnung nach Anspruch 10, gekennzeichnet durch Mittel zum Speichern von Audiosignalsequenzen und Komparatormittel zum sequenzweisen Vergleichen des zu überprüfenden Audiosignals mit gespeicherten fehlerbehafteten Audiosignalsequenzen.

12. Anordnung nach Anspruch 10 oder 11, gekennzeichnet durch Mittel zur synthetischen Erzeugung eines Audiosignalabschnittes, welcher einen Textabschnitt als gesprochene Sprache darstellt.

13. Anordnung nach einem der Ansprüche 10 bis 12, dadurch gekennzeichnet, dass das Mikrofon ein Mikrofon eines Telefonapparates, eines Handfunktelefons, eines Diktiergerätes, eines zur Erfassung von diktiertem Text ausgebildeten Computers, eines Megaphons oder einer Mikrofon und Lautsprecher umfassenden Lautsprecheranlage ist.

14. Anordnung nach einem der Ansprüche 10 bis 13, dadurch gekennzeichnet, dass sie weiter Anzeigemittel umfasst, welche es ermöglichen, das Erkennen eines Fehlers in der Sprache unmittelbar dem Sprecher anzuzeigen, dessen Sprache vom Mikrofon empfangen wird.
